# EUROPEAN PATENT SPECIFICATION

(11) **EP 1 794 525 B1**
(45) Date of publication and mention of the grant of the patent: **03.06.2009**
(21) Application number: 05779683.1
(22) Date of filing: 06.09.2005
(51) Int. Cl.: F27B 3/18, F27D 3/10

(54) **DISTRIBUTOR OF HOT FEED MATERIAL**
VERTEILER VON HEISSEM ZUFUHRMATERIAL
DISTRIBUTEUR DE MATERIAU D'ALIMENTATION CHAUDE

(30) Priority: 09.09.2004 FI 20041171
(43) Date of publication of application: 13.06.2007
(73) Proprietor: Outotec Oyj, 02200 Espoo (FI)
(72) Inventor: KOKKONEN, Kasper, FI-01510 Vantaa (FI); VÄLIMÄKI, Risto, FI-02230 Espoo (FI)
(74) Representative: Zipse Habersack Kritzenberger
(86) International application number: PCT/FI2005/000381
(87) International publication number: WO 2006/027413

(56) References cited:
- DE-A1- 2 830 720
- DE-A1- 3 326 505
- FR-A- 1 260 319
- FR-A- 1 582 172
- JP-A- 04 358 015
- US-A- 3 900 117
- US-A- 4 029 220

## Description

The invention relates to feeding powdery or fine-grained solid material into a metallurgical furnace. To be more precise, the invention relates to a device for distributing hot powdery or fine-grained feed material into feeding silos, from which the feed is directed into a metallurgical melting furnace, such as an electric furnace.

The solid mineral-containing raw material, e.g., a concentrate, which is fed into a metallurgical furnace, such as an electric furnace, usually requires pre-treatment, wherein it is homogenized, dried and pre-heated and/or pre-reduced. The feed thus provided is directed to flow at a suitable velocity and is evenly distributed into the furnace.

Any adverse gases discharged from the metallurgical melting furnace and released from the hot concentrate should be directed out of the production plant in a controlled way. One problem with the uncontrolled discharge of adverse or dangerous gases is the feeding system of the solid raw material that is fed into the furnace, and the related silos. Furthermore, there are special problems related to the feeding of pre-heated and fine-grained raw material with a grain size of, e.g., 1 to 2mm or less into a metallurgical furnace. In connection with transfers, the fine-grained raw material makes dust and the heated material reacts especially easily with the ambient gaseous atmosphere.

In solutions according to known technology, the feed of the metallurgical furnace is dried and heated in a pre-heat or a pre-reduction unit. The hot feed is distributed into batching silos, along which the feed flows under gravitational force towards the furnace that is arranged below the silos. Usually, there are several batching silos provided, for example, 3 to 12 per furnace, typically, at least 9. The outlets of the silos are spaced equally above the melt of the furnace, whereby the feed discharging from the silos is evenly distributed into the furnace.

Generally, between the distributor of the hot feed and the furnace, in connection with the feeding silos, a feed adjuster for the solid material flow is provided, which may be, for example, a loss in weight feeder, which is described in Patent Publication US 6446836.

From the preheat unit, the feed is usually discharged along one pipe duct into the feed distributing apparatus. The purpose of the distributor is to distribute the feed evenly into the silos, which further direct the feed to the feed adjusters.

Patent Publication US 3900117 discloses a feeding ring, which distributes the hot feed coming from a furnace, which is placed above the feeding ring, into the feeding silos of the electric furnace below the feeding ring. The feeding ring comprises a rotary ring-shaped shelf, onto which the concentrate is fed from one point. The concentrate is dropped from the rotary shelf into the feeding silos, for example, by means of a scraper. The feeding ring is covered and isolated from the environment in a dust- and gas-tight manner by means of water seals comprising water troughs. The solution disclosed in the publication is not well-suited to feeding fine-grained feed. In addition, the structure is massive and complex compared with the solution according to the present invention.

The newly developed distributor of hot feed is especially well-suited for feeding homogeneous and free-flowing material, such as pre-heated and pre-reduced ilmenite, into the feeding or batching silos. As the discharge of harmful gases from the feeding silos and the feed distributor is prevented, the invention provides an environmentally safe way to feed a hot feed. The device can be used to treat feeds of very high temperatures.

The device according to the invention for distributing hot feed into the feeding silos of a metallurgical furnace comprises a vertical inlet pipe for receiving the feed from the outlet of the previous process, generally a preheating unit. In the inlet pipe, a batching pipe is fitted to distribute the feed alternately into at least two feeding silos through feed hoppers, which are arranged below the inlet pipe and the batching pipe on the periphery of a circle, the centre point of which is next to the inlet pipe. The inlet pipe and the batching pipe are arranged to rotate with respect to the centre axis of the inlet pipe, whereby the feed is alternately directed into each fixed feed hopper. The batching pipe is arranged between a protective shield that is fixed to the batching pipe and gas-tightly insulated from the environment.

The feed is discharged from the feeding hoppers into the feeding silos of the metallurgical furnace. For each feeding hopper, there is provided a respective feeding silo. In conventional arrangements, there are several feeding silos. The feeding hopper herein refers to a silo that works like a channel to direct the feed into the feeding silos, similarly to a funnel. The feeding hoppers are shaped so that the feed is directed under gravitational force to the inlet of the feeding silo that is fitted below the hopper. The shape of the feeding hopper is not necessarily limited to a cone, but a cylinder or a channel with a square cross section may also be suitable. The shape of the feeding hopper is preferably an upward-opening, truncated cone. According to one embodiment of the invention, the feeding hoppers are integral parts of the feeding silos.

The flow of feed discharging into the feeding hoppers through the inlet pipe and further the batching pipe is continuous or it has occasional or controlled breaks. The feeding hoppers are fitted on the periphery of a circle with respect to one another so that the feed flowing from the batching pipe to the space between them is directed into the feeding hoppers. The arrangement is preferably such that the upper edge of each feeding hopper is in contact with the edges of the adjacent feeding hoppers, for example, by means of an integral deflection plate. The deflection plate is preferably shaped so that the feed flows towards the feeding hoppers.

The batching pipe and the upper edges of the feeding hoppers are insulated from the environment by means of a protective shield and gas seals. The protective shield delimits a space, within which the outlet of the batching pipe and the feed openings of the feeding hoppers remain. The protective shield can be arranged in a fixed relationship with the batching pipe, whereby it rotates along with the batching pipe. The protective shied preferably comprises two downward-opening cylindrical shields, water seal troughs being arranged at the lower edges thereof to prevent the gases from flowing out of the protective shield. The water seal structure allows a free rotation of the upper part of the feeding device around its centre axis. Accordingly, the device preferably includes two annular water troughs, wherein the lower edges of the protective shield are arranged to slide while the feeding device rotates. Structures are arranged in the troughs for implementing a continuous flow of water in and out of the troughs; the structures are not presented in the appended drawings, but the implementation thereof is obvious to those skilled in the art. Apart from gas seals, the water seal structures also function as a system that cools the steel structures.

The feeding device and the feeding silos are provided with an insulating envelope, a heat-resisting wearing course being provided on its surface.

In the following, the invention is described in detail with reference to the appended drawings.
Fig. 1 shows a hot feed distributor according to a preferred embodiment of the invention as viewed from below, i.e., from the direction of the metallurgical furnace,
Fig. 2 shows a side view of the distributor according to Fig. 1,
Fig. 3 shows the section A-A of the distributor in Fig. 2,
Fig. 4 shows the enlarged detail A of Fig. 3, and
Fig. 5 shows the enlarged detail B of Fig. 3.

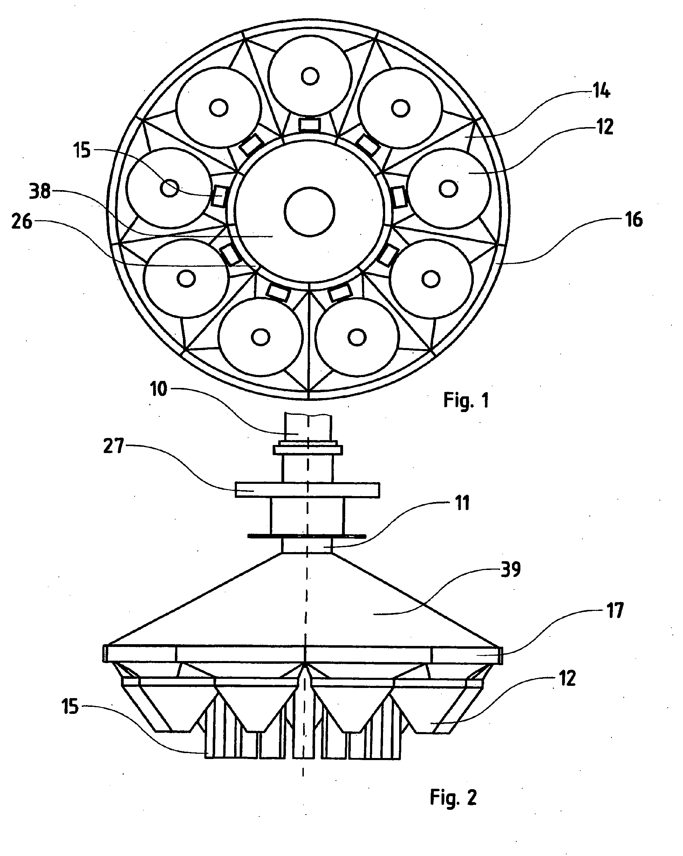

In the distributor according to a preferred embodiment of the invention, there are more than 6, preferably, 9 feeding hoppers 12, as shown in Fig. 1. The feeding hoppers 12 are fixed to feet 15, which brace the stationary parts of the device to the intermediate floor 23 of a construction. The feeding hoppers 12 are connected to one another by means of an integral supporting structure 14, which also constitutes a shaped deflection plate for directing the feed into the feeding hoppers 12. The downward-opening hopper, which is closed at its upper part and which forms the lower part 38 of the distributor's protective shield, is shown from below in Fig. 1. The annular troughs 16, 26 of a water seal structure are arranged in the supporting structure 14.

Fig. 2 shows the outer cone 39 of the protective shield and the outer edge 17 of the outer water trough 16. The outer cone 39 of the protective shield is fitted in an inlet pipe 11 so that a continuous surface is formed, covering a batching pipe 13 and the feeding hoppers 12. The force that rotates the inlet pipe 11, the batching pipe 13 and the protective shield 38, 39 is connected to the structure by means of a bearing 20 and a transmission plate 27.

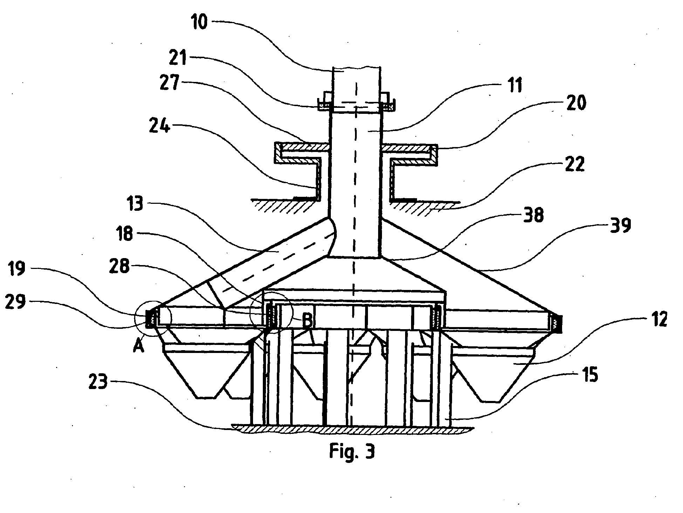

Fig. 3 shows that the moving parts of the device are braced to the upper intermediate floor 22 of the construction by means of a supporting structure 24, and fitted with a bearing to a tooth ring that carries the rotating mass of the device. In other words, the moving parts are arranged to rotate on the bearing 20.

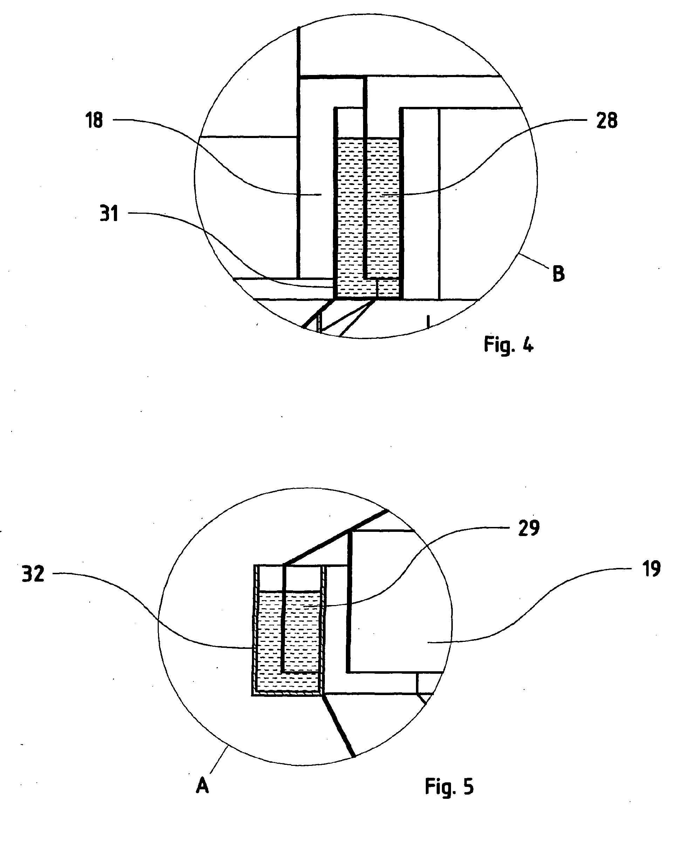

The delivery tube 10 of the preheat unit is connected to the inlet pipe 11 of the distributor. The delivery tube 10 is stationary and the inlet pipe 11 is fitted to rotate around its centre axis. The discharge of gases between the inlet pipe 11 and the delivery tube 11 of the preheat unit is prevented by means of a water seal structure 21. The batching pipe 13 is fitted in the inlet pipe 11 that receives the feed from the outlet 10 of the previous process, to distribute the feed alternately into the feeding hoppers 12. The feeding hoppers 12 are arranged below the inlet pipe 11 and the batching pipe 13 on the periphery of a circle, the centre point of which is next to the inlet pipe 11. The batching pipe 13 is arranged between the cones 38, 39 of the protective shield that are fixed thereto. The cones 38, 39 of the protective shield are insulated from the environment in a gas-tight manner by water seal structures A and B. The troughs 31, 32 of the water seal structures and the water 28, 29 flowing therein are shown in Fig. 3. The water seal structures A and B are shown in detail in Figs. 4 and 5, which show the edge 18 of the inner protective shield and the edge 19 of the outer protective shield, among others.

## Claims

1. A device for distributing hot feed into the feeding silos of a metallurgical furnace, comprising a vertical inlet pipe (11) for receiving the feed from the outlet (10) of the previous process, a batching pipe (13) being fitted to the inlet pipe (11) for distributing the feed alternately into at least two feeding hoppers (12),
**characterized in that**
the feeding hoppers (12) are arranged below the inlet pipe (11) and the batching pipe (13) on the periphery of a circle, the centre point of which is next to the inlet pipe (11), the inlet pipe (11) and the batching pipe (13) being arranged to rotate with respect to the centre axis of the inlet pipe (11), whereby the feed is directed alternately into each fixed feeding hopper (12), and
the batching pipe (13) is arranged inside a protecting shield (38, 39) that is fixed to the batching pipe (13), the batching pipe (13) and the upper edges of the feeding hoppers being insulated from the environment by means of the protective shield (38, 39) and gas seals.

2. A device according to Claim 1, **characterized in that** the feeding hoppers (12) are an integral part of the feeding silos.

3. A device according to Claim 1, **characterized in that** the protecting shield comprises two downward-opening cylindrical shields (38, 39), water seal troughs (16, 26) being arranged at the lower edges thereof to prevent the gases from flowing out of the protective shield, and the lower edges of the protecting shields (38, 39) are arranged to freely slide in the water seal troughs (16, 26) while the distributor rotates.

4. A device according to Claim 1, **characterized in that** the upper edges of the feeding hoppers (12) are in contact with the upper edges of the adjacent feeding hoppers by means of an integral deflection plate (14).

5. A device according to Claim 1, **characterized in that** there are more than 6, preferably 9 feeding hoppers (12) provided.

6. A device according to Claim 1, **characterized in that** the feeding hoppers (12) are fixed to the supporting feet (15) that brace the stationary parts of the device to the intermediate floor (23) of a construction.

7. A device according to Claim 1, **characterized in that** the feeding device and the feeding silos are provided with an insulating envelope having a heat-resistant wearing course on its surface.

8. A device according to Claim 1, **characterized in that** the annular troughs (16, 26) of the water seal structure are arranged in a supporting structure (14).

9. A device according to Claim 1, **characterized in that** the force that rotates the inlet pipe 11, the batching pipe 13 and the protecting shield (38, 39) is connected to the structure by means of a bearing 20 and a transmission plate 27.

10. A device according to Claim 1, **characterized in that** the batching pipe (13) is arranged between the cones (38, 39) of the protecting shield that are fixed thereto.

## Patentansprüche

1. Vorrichtung zum Verteilen von heißem Zufuhrmaterial in die Zufuhrsilos eines metallurgischen Verhüttungsofens, aufweisend ein vertikales Einlassrohr (11) zum Aufnehmen des Zufuhrmaterials vom Auslass (10) des voran gegangenen Prozesses, ein Befüllrohr (13), das zum wechselweisen Verteilen des Zufuhrmaterials in zumindest zwei Zufuhrtrichter (12) an dem Einlassrohr (11) angeordnet ist,
**dadurch gekennzeichnet, dass** die Zufuhrtrichter (12) unterhalb des Einlassrohres (11) und des Befüllrohres (13) am Außenumfang eines Kreises angeordnet sind, dessen Mittelpunkt nächst zum Einlassrohr (11) ist, wobei das Einlassrohr (11) und das Befüllrohr (13) so angeordnet sind, dass sie bezüglich der Mittelachse des Einlassrohres (11) rotieren können, wodurch das Zufuhrmaterial wechselweise in jeden jeweiligen feststehenden Zufuhrtrichter (12) gerichtet ist, und dass das Befüllrohr (13) innerhalb eines Schutzschildes (38, 39) angeordnet ist, das an dem Befüllrohr (13) fixiert ist, wobei das Befüllrohr (13) und die oberen Ränder der Zufuhrtrichter gegenüber der Umgebung mittels des Schutzschildes (38, 39) und mittels Gasdichtungen isoliert sind.

2. Vorrichtung nach Anspruch 1, **dadurch gekennzeichnet, dass** die Zufuhrtrichter (12) ein integraler Teil der Zufuhrsilos sind.

3. Vorrichtung nach Anspruch 1, **dadurch gekennzeichnet, dass** das Schutzschild zwei nach unten öffnende zylindrische Abschirmungen (38, 39) aufweist, wobei Wasser-Dichtrinnen (16, 26) an deren unteren Rändern angeordnet sind, um zu verhindern, dass Gase aus dem Schutzschild strömen, und dass die unteren Ränder der Schutzschilde (38, 39) so angeordnet sind, dass sie frei in den Wasser-Dichtrinnen (16, 26) gleiten, während der Verteiler rotiert.

4. Vorrichtung nach Anspruch 1, **dadurch gekennzeichnet, dass** die oberen Ränder der Zufuhrtrichter (12) mit den oberen Rändern der angrenzenden Zufuhrtrichter mittels einer integralen Umlenkplatte (14) in Kontakt sind.

5. Vorrichtung nach Anspruch 1, **dadurch gekennzeichnet, dass** mehr als sechs, vorzugsweise neun Zufuhrtrichter (12) vorgesehen sind.

6. Vorrichtung nach Anspruch 1, **dadurch gekennzeichnet, dass** die Zufuhrtrichter (12) am Stützfuß (15) fixiert sind, mit der die stationären Teile der Vorrichtung an dem Zwischenboden (23) einer Konstruktion befestigt sind.

7. Vorrichtung nach Anspruch 1, **dadurch gekennzeichnet, dass** die Zufuhrvorrichtung und die Zufuhrsilos mit einer isolierenden Einhüllenden versehen sind, die eine hitzefeste Verschleißschicht auf ihrer Oberfläche hat.

8. Vorrichtung nach Anspruch 1, **dadurch gekennzeichnet, dass** die kreisförmigen Rinnen (16, 26) der Wasser-Dichtstruktur in einer Tragstruktur (14) angeordnet sind.

9. Vorrichtung nach Anspruch 1, **dadurch gekennzeichnet, dass** die das Einlassrohr (11), das Befüllrohr (13) und das Schutzschild (38, 39) rotierende Kraft mittels eines Lagers (20) und einer Kraftübertragungsplatte (27) auf die Struktur übertragen wird.

10. Vorrichtung nach Anspruch 1, **dadurch gekennzeichnet, dass** das Befüllrohr (13) zwischen den Kegeln (38, 39) des Schutzschildes angeordnet ist, die daran befestigt sind.

## Revendications

1. Dispositif prévu pour distribuer une alimentation chaude dans les silos d'alimentation d'un four métallurgique, comprenant un tuyau d'entrée vertical (11) destiné à recevoir l'alimentation provenant de la sortie (10) du processus précédent, un tuyau de distribution (13) étant connecté au tuyau d'entrée (11) pour distribuer l'alimentation de manière alternée dans au moins deux trémies d'alimentation (12), **caractérisé par le fait que** les trémies d'alimentation (12) sont disposées en dessous du tuyau d'entrée (11) et du tuyau de distribution (13) sur la partie périphérique d'un cercle, dont le point milieu est adjacent au tuyau d'entrée (11), le tuyau d'entrée (11) et le tuyau de distribution (13) étant disposés de manière à effectuer un mouvement de rotation par rapport à l'axe central du tuyau d'entrée (11), l'alimentation étant dirigée en alternance dans chaque trémie d'alimentation fixe (12), et le tuyau de distribution (13) est disposé à l'intérieur d'un écran de protection (38, 39) qui est fixé au tuyau de distribution (13), le tuyau de distribution (13) et les bords supérieurs des trémies d'alimentation étant isolés de l'environnement au moyen de l'écran de protection (38, 39) et de joints de gaz.

2. Dispositif selon la revendication 1,
**caractérisé par le fait que** les trémies d'alimentation (12) font partie intégrante des silos d'alimentation.

3. Dispositif selon la revendication 1,
**caractérisé par le fait que** l'écran de protection comprend deux écrans cylindriques (38, 39) ayant une ouverture tournée vers le bas, des goulottes étanches à l'eau (16, 26) étant disposées au niveau des bords inférieurs de ces derniers pour éviter que les gaz s'échappent hors de l'écran de protection, et les bords inférieurs des écrans de protection (38, 39) sont disposés de manière à coulisser librement dans les goulottes étanches à l'eau (16, 26) pendant que le distributeur pivote.

4. Dispositif selon la revendication 1,
**caractérisé par le fait que** les bords supérieurs des trémies d'alimentation (12) sont en contact avec les bords supérieurs des trémies d'alimentation adjacentes au moyen d'une plaque déflectrice monobloc (14).

5. Dispositif selon la revendication 1,
**caractérisé par le fait que** plus de 6 trémies d'alimentation (12), préférentiellement 9, sont prévues.

6. Dispositif selon la revendication 1,
**caractérisé par le fait que** les trémies d'alimentation (12) sont fixées aux pieds de support (15) qui ancrent les éléments fixes du dispositif à l'étage intermédiaire (23) d'une construction.

7. Dispositif selon la revendication 1,
**caractérisé par le fait que** le dispositif d'alimentation et les silos d'alimentation sont munis d'une enveloppe isolante ayant un revêtement résistant à la chaleur sur sa surface.

8. Dispositif selon la revendication 1,
**caractérisé par le fait que** les goulottes annulaires (16, 26) de la structure étanche à l'eau sont disposées dans une structure portante.

9. Dispositif selon la revendication 1,
**caractérisé par le fait que** la force qui fait pivoter le tuyau d'entrée 11, le tuyau de distribution 13 et l'écran de protection (38, 39) est reliée à la structure au moyen d'un palier 20 et d'une plaque de transmission 27.

10. Dispositif selon la revendication 1,
**caractérisé par le fait que** le tuyau de distribution (13) est disposé entre les cônes (3 8, 3 9) de l'écran de protection y étant fixés.
